# EUROPÄISCHE PATENTSCHRIFT

(11) **EP 0 815 143 B1**
(45) Veröffentlichungstag und Bekanntmachung des Hinweises auf die Patenterteilung: **24.01.2001**
(21) Anmeldenummer: 96906763.6
(22) Anmeldetag: 13.03.1996
(51) Int. Cl.: C08B 31/18, C08B 15/04, C08B 37/00

(54) **VERBESSERTES OXIDATIONSVERFAHREN ZUR HERSTELLUNG VON POLYCARBOXYLATEN AUS POLYSACCHARIDEN**
IMPROVED OXIDATION PROCESS FOR PRODUCING POLYCARBOXYLATES FROM POLYSACCHARIDES
PROCEDE D'OXYDATION AMELIORE PERMETTANT DE PRODUIRE DES POLYCARBOXYLATES A PARTIR DE POLYSACCHARIDES

(30) Priorität: 22.03.1995 DE 19510313
(43) Veröffentlichungstag der Anmeldung: 07.01.1998
(73) Patentinhaber: Henkel Kommanditgesellschaft auf Aktien, 40191 Düsseldorf (DE)
(72) Erfinder: MÖLLER, Thomas, D-40593 Düsseldorf (DE); ENGELSKIRCHEN, Konrad, D-40668 Meerbusch (DE); FISCHER, Herbert, D-40229 Düsseldorf (DE); NOACK, Wolf-Eckart, D-45136 Essen (DE)
(86) Internationale Anmeldenummer: EP9601065
(87) Internationale Veröffentlichungsnummer: WO9629351

(56) Entgegenhaltungen:
- WO-A-93/16110
- WO-A-95/20608
- DE-A- 2 552 881
- DE-C- 941 282
- ABSTRACT BULLETIN OF THE INSTITUTE OF PAPER CHEMISTRY, Bd. 43, Nr. 5, 1.November 1972, APPLETON US, Seite 474 XP002007866 YASNITSKII B.G. ET AL.: "Oxidation of Cellulose and its derivatives." & ZH. PRIKL. KHIM., Bd. 44, Nr. 7, 1.Juli 1971, Seiten 1615-1619,

## Beschreibung

Die Erfindung betrifft ein vereinfachtes Verfahren zur Herstellung von Polycarboxylaten durch selektive Oxidation von Polysacchariden mit gasförmigem Stickstoffdioxid.

Zur Herstellung von Polycarboxylaten durch oxidative Behandlung von Polysacchariden, beispielsweise Cellulose, Stärke und Dextrinen, besteht umfangreiches Wissen. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.O. Seite 2042 ff, insbesondere Seite 2124 ff (Oxidationsprodukte der Cellulose) und Seite 2166 ff (Oxidierte Stärken). Verwiesen sei weiter auf die Veröffentlichung "Cellulose Chemistry and Its Applications" (1983), John Wiley & Sons, Chichester, GB, dort insbesondere T.P.Nevell, "Oxidation of Cellulose" (Kapitel 10) sowie die umfangreiche dort zitierte Literatur, a.a.O Seite 262 bis 265.

Grob zusammenfassend gilt: Eine Vielzahl von Oxidationsmitteln ist für die Oxidation von Polysacchariden, insbesondere von ausschließlich aus Glucose aufgebauten Polyglucosanen gebräuchlich. Genannt seien beispielsweise (Luft)-Sauerstoff, Wasserstoff-Peroxid, Natriumhypochlorit beziehungsweise -bromit, Periodsäure beziehungsweise Periodate, Blei(IV)-Acetat, Stickstoffdioxid und Cer(IV)-Salze. Diese Oxidationsmittel reagieren sehr unterschiedlich mit den Anhydroglucoseeinheiten, vgl. beispielsweise die Formelbilder in Houben-Weyl a.a.O. Seite 2124. So bewirken beispielsweise Perjodate oder Blei(IV)-Acetat eine C-C Spaltung der Anhydroglucose-Ringe; man erhält aus Cellulose die sogenannte 2,3-Dialdehydcellulose und analog aus Stärke Dialdehydstärke. Bekannt ist außerdem, daß bei der Einwirkung von Stickstoffdioxid auf Cellulose die Oxidation der primären Alkoholgruppe zur Carboxylgruppe die weitaus überwiegende Reaktion ist. Das Oxidationsmittel, in der Regel im Gleichgewicht mit Distickstofftetroxid vorliegend, kann dabei gasförmig oder gelöst in einem inerten organischen Lösungsmittel eingesetzt werden, vgl. auch hier Houben-Weyl a.a.O. Seite 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheiten zur Carboxylgruppe bewerkstelligen. So ist aus der US-amerikanischen Patentschrift US 2 472 590 die Oxidation von Stärke mit gasförmigem oder in Wasser beziehungsweise in verschiedenen organischen Lösungsmitteln gelöstem Stickstoffdioxid bei Raumtemperatur und Normaldruck bekannt.

Unter diesen Bedingungen erhält man die annähernd vollständige Umwandlung der primären Alkoholgruppen der Polysaccharide in Carboxylgruppen erst nach sehr langen Reaktionszeiten, die unter Umständen bis zu mehreren Tagen betragen können. Außerdem werden bei den bekannten Verfahren hohe Stickstoffdioxidmengen, bezogen auf zu oxidierendes Polysaccharid, benötigt.

Aus der internationalen Patentanmeldung WO 93/16110 ist eine wesentliche Verbesserung der Herstellung derartiger Oxidationsprodukte von Polysacchariden bekannt. Die dort offenbarte Erfindung geht von der Erkenntnis aus, daß Polycarboxylate aus Polysacchariden in einem einfachen Verfahren in hohen Ausbeuten zu gewinnen sind, wenn die Oxidationsreaktion mit Stickstoffdioxid/Distickstofftetroxid in Gegenwart von Sauerstoff bei erhöhten Temperaturen und vorzugsweise bei erhöhten Drucken durchgeführt wird. Die Formulierung "Stickstoffdioxid/Distickstofftetroxid" steht dabei, wie auch bei der vorliegenden Erfindung, für das unter den jeweiligen Reaktionsbedingungen vorliegende Gleichgewichtsgemisch aus Stickstoffdioxid und seinem Dimeren Distickstofftetroxid.

Insbesondere wenn man die in diesem Dokument beschriebene Variante der suspensions- und lösungsmittelfreien Oxidation mit gasförmigem Stickstoffdioxid/Distickstofftetroxid durchführt, wurde beobachtet, daß man beim Anfahren der Reaktion bei relativ tiefen Temperaturen bereits einen Verbrauch an Stickstoffdioxid/Distickstofftetroxid messen kann, ohne daß eine merkliche Oxidation stattfindet. Andererseits findet bei Verwendung sehr hoher Temperaturen nach kurzer Zeit praktisch keine Oxidation mehr statt. Diese Phänomene lassen sich, ohne an diese Erklärung gebunden sein zu wollen, mit der Annahme eines der Oxidationsreaktion vorgelagerten Adsorptions- beziehungsweise Absorsptionsgleichgewichtes erklären, wobei unerheblich scheint, ob es sich dabei um chemisorptive oder physisorptive oder um eine Kombination beider Vorgänge handelt.

Auf diese Hypothese aufbauend wurde gefunden, daß man die Umsetzung von Polysacchariden mit Stickstoffdioxid/Distickstofftetroxid besonders schonend und in kürzeren Zeiten durchführen kann, wenn man die Gesamtreaktion mehrstufig derart führt, daß man in einer ersten Stufe bei niedriger Temperatur das Polysaccharid mit dem Stickstoffdioxid/Distickstofftetroxid in Kontakt bringt und dann in einer zweiten Stufe, gegebenenfalls ohne weiteres Zuführen von Stickstoffdioxid/Distickstofftetroxid, das beladene Polysaccharid bei höherer Temperatur der eigentlichen Oxidation unterwirft.

Gegenstand der Erfindung ist dementsprechend ein Verfahren zur Herstellung von Polycarbonsäuren oder deren Salzen aus Polysacchariden durch Oxidation mit gasförmigem Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, welches dadurch gekennzeichnet ist, daß man bei einer Beladungstemperatur im Bereich vom Siedepunkt des Stickstoffdioxids unter dem jeweiligen Druck bis zu einer 50 °C darüber liegenden Temperatur Stickstoffdioxid/Distickstofftetroxid zuführt, welches zumindest anteilsweise vom Polysaccharid absorbiert wird, und anschließend bei einer Oxidationstemperatur, die mindestens 10 °C, vorzugsweise 10 °C bis 40 °C und insbesondere 15 °C bis 30 °C über der Beladungstemperatur liegt, gegebenenfalls ohne weitere Zufuhr von Stickstoffdioxid/Distickstofftetroxid, primäre Alkoholgruppen zu Carboxylgruppen oxidiert. Falls der gewünschte Umwandlungsgrad der primären Alkoholgruppen in Carboxylgruppen nach einmaligem Durchlauf dieses Cyclus nicht erreicht ist, kann nach entsprechender Abkühlung des nur partiell oxidierten Polysaccharids dieses erneut und gegebenenfalls noch mehrmals den genannten Schritten unterworfen werden. Der Umwandlungsgrad kann in einfacher Weise durch die Bestimmung der Säurezahl des Oxidationsproduktes, wie beispielsweise in der internationalen Patentanmeldung WO 93/16110 beschrieben, ermittelt werden.

Der Oxidationsschritt wird, wenn man unter Normaldruck arbeitet, vorzugsweise bei Temperaturen im Bereich von 40 °C bis 80 °C, insbesondere von 45 °C bis 70 °C durchgeführt. Dabei kann Sauerstoff, allein oder im Gemisch mit unter den Reaktionsbedingungen inertem Gas, anwesend sein, dessen Zugabe einmalig bei Beginn der Oxidationsreaktion oder mehrfach, gewünschtenfalls kontinuierlich, während der Reaktion erfolgen kann. Bei letztgenannter Reaktionsführung kann die Oxidationsreaktion bekanntlich temperatur- oder druckabhängig über die Sauerstoffdosierung gesteuert werden. Vorzugsweise regelt man die Sauerstoffzugabe so, daß die Oxidationstemperatur im Bereich von 40 °C bis 80 °C bleibt.

Als inerte, das heißt bei den jeweils gewünschten Verfahrensbedingungen nicht reagierende Gase können Edelgase wie Helium oder Argon und Kohlendioxid, insbesondere aber Stickstoff, Stickstoffmonoxid und Distickstoffmonoxid, aber auch beliebige Mischungen derartiger Gase eingesetzt werden. Der Sauerstoffgehalt in der Gasmischung liegt dabei vorzugsweise im Bereich von 1 Vol.-% bis 30 Vol.-%, insbesondere von 3 Vol.-% bis 10 Vol.-%. Eine bevorzugte Ausführungsform des erfindungsgemäßen Verfahrens beinhaltet die Zuführung von Sauerstoff durch das Einleiten von Luft.

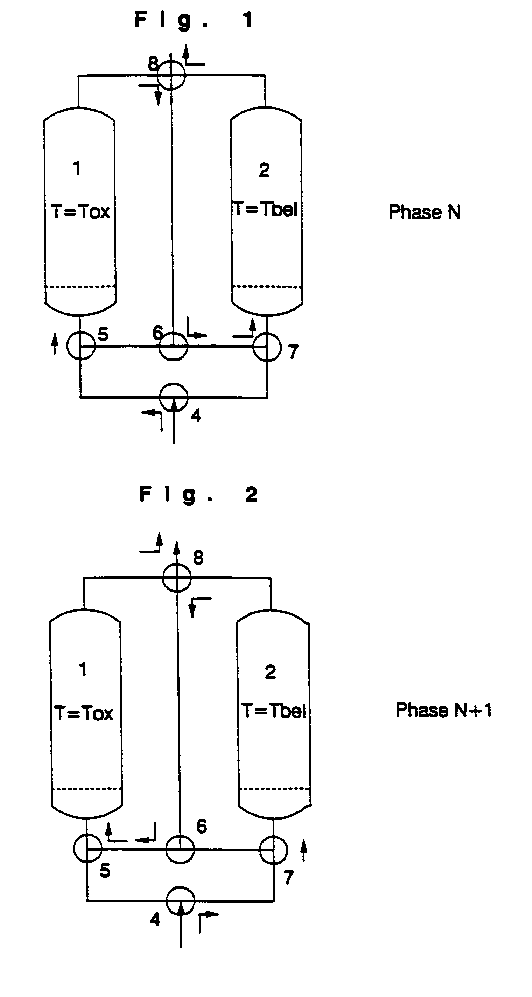

Das erfindungsgemäße Verfahren wird vorzugsweise in Form eines Wirbelschicht-Oxidationsverfahrens ausgeführt, wobei das zu oxidierende Polysaccharid in Pulverform eine Wirbelschicht bildet, die von einem zumindest zeitweise Stickstoffdioxid/Distickstofftetroxid enthaltenden Wirbelmittel durchströmt wird. Ein weiterer Gegenstand der Erfindung ist daher die Verwendung von Wirbelschichtreaktoren in einem erfindungsgemäßen Verfahren. Unter Wirbelschicht soll dabei - ohne auf diese Art der Erzeugung beschränkt zu sein - die Erscheinung verstanden werden, die zu beobachten ist, wenn auf waagrechten, perforierten Böden lagerndes feinkörniges Schüttgut von unten von Gasen, als Wirbelmittel bezeichnet, durchströmt wird. Ein derartiges aus der internationalen Patentanmeldung WO 93/16110 bekanntes Verfahren kann erfindungsgemäß dahingehend abgewandelt werden, daß man die Reaktortemperatur zum Beispiel durch innenliegende Wärmeaustauscher zu Beginn der Zugabe des Stickstoffdioxid/Distickstofftetroxids bei der Beladungstemperatur im Bereich vom Siedepunkt des Stickstoffdioxids unter den jeweiligen Bedingungen bis zu einer 50 °C höheren Temperatur hält, bis zumindest eine anteilsweise Absorption erfolgt ist, und anschließend die Temperatur um mindestens 10 °C, insbesondere um 10 °C bis 40 °C und bevorzugt um 15 °C bis 30 °C auf die Temperatur anhebt, bei der die eigentliche Oxidation stattfindet. Bevorzugt ist jedoch, daß man dem Wirbelschichtreaktor für die eigentliche Oxidationsreaktion (Oxidationsreaktor) einen weiteren Wirbelschichtreaktor vorschaltet, der zum Beispiel durch innenliegende Wärmeaustauscher auf entsprechend niedrigerer Temperatur gehalten wird und in dem das zu oxidierende Polysaccharid mit Stickstoffdioxid/Distickstofftetroxid beladen wird (Beladungsreaktor). Nach der Beladung kann das Polysaccharid aus dem Beladungsreaktor entnommen und in den Oxidationsreaktor überführt werden. Einfacher im Sinne einer angenähert kontinuierlichen Prozeßführung ist jedoch, wenn nach Entnahme des oxidierten Produktes aus dem Oxidationsreaktor dieser mit unbeladenem Polysaccharid befüllt wird, das beladene Polysaccharid in dem Beladungsreaktor verbleibt und man die Temperatur- und Strömungsbedingungen der beiden Reaktoren so vertauscht, daß aus dem Beladungsreaktor der Phase N der Oxidationsreaktor der Phase N+1 wird und aus dem Oxidationsreaktor der Phase N der Beladungsreaktor der Phase N+1. Durch den in der nächsten Phase vorzunehmenden Tausch im gleichen Sinne entspricht Phase N+2 der Phase N. Dieses quasi-kontinuierliche Verfahren wird durch die Fig. 1 und Fig. 2 illustriert: In der Phase N des Verfahrens (Fig. 1) entspricht Reaktor **1** dem Oxidationsreaktor und Reaktor **2** dem Beladungsreaktor, wobei Stickstoffdioxid/Distickstofftetroxid als alleiniges Wirbelmittel oder als Teil eines inertgashaltigen Wirbelmittels dem im oben angeführten höheren Temperaturbereich (**T**_{**ox**}) gehaltenen Oxidationsreaktor zugeführt wird und nicht verbrauchtes Stickstoffdioxid/Distickstofftetroxid nach Verlassen des Oxidationsreaktors in den auf der Beladungstemperatur im Bereich vom Siedepunkt des Stickstoffdioxids bis 50 °C darüber (**T**_{**bel**}) gehaltenen Beladungsreaktor geführt wird. Gewünschtenfalls kann das Wirbelmittel nach Durchströmen des Oxidationsreaktors ohne Kreislaufführung die Vorrichtung verlassen, wobei Stickstoffdioxid/Distickstofftetroxid als alleiniges Wirbelmittel oder als Teil eines inertgashaltigen Wirbelmittels auch in den Beladungsreaktor von außen zugeführt werden muß. Das den Beladungsreaktor verlassende, nur noch wenig oder kein Stickstoffdioxid/Distickstofftetroxid mehr enthaltende Wirbelmittel kann, insbesondere wenn es zuvor durch den Oxidationsreaktor geströmt war, einer Anlage zur Reoxidation des Stickstoffdioxids unter anschließender Rückführung in den Oxidationsreaktor oder einer Entsorgungseinrichtung zugeführt werden. Nach Entfernen des Produktes aus Reaktor **1** und Einfüllen von neuem Polysaccharid in diesen Reaktor **1** gelangt man durch Absenken der Temperatur in Reaktor **1** auf **T**_{**bel**} sowie Anheben der Temperatur in Reaktor **2** auf **T**_{**ox**} und Umschalten der Ventile **4**, **5**, **6**, **7** und **8**, wie in Fig. 2 dargestellt, zu Phase N+1, bei der in Reaktor 1 der Beladungsschritt und in Reaktor **2** der Oxidationsschritt erfolgt. Gewünschtenfalls können in die Rohrleitungen, welche die Reaktoren verbinden, Kondensatoren zur Entfernung des Reaktionswassers eingebaut werden, um insbesondere bei mehrfach hintereinander erfolgendem Umschalten der Reaktoren ein feuchtigkeitsbedingtes Zusammenbacken des Polysaccharids zu vermeiden.

Die bei dem beschriebenen Verfahren benötigten Zeiten hängen bei gegebenem Polysaccharid und Stickstoffdioxidgehalt im Wirbelmittel im wesentlichen von dem gewünschten Oxidationsgrad und der Temperatur ab. Als Richtwerte können die Angaben dienen, daß bei einer Temperatur **T**_{**ox**} von 50 °C und Normalddruck unter Einsatz von 12 Molequivalenten Stickstoffdioxid pro Stunde, bezogen auf zu oxidierende Hydroxylgruppen, nach 30 Minuten 18 % bis 22 %, nach 60 Minuten 60 % bis 70 % und nach 1,5 Stunden 85 % bis 95 % der primären Alkoholgruppen in Carboxylgruppen umgewandelt werden. Normalerweise kann der Oxidationsschritt nach etwa 2 bis etwa 5 Stunden abgeschlossen sein. Der Beladungsschritt kann in einem Zeitraum von etwa 2 bis etwa 5 Stunden, insbesondere etwa 3 bis etwa 4 Stunden durchgeführt werden.

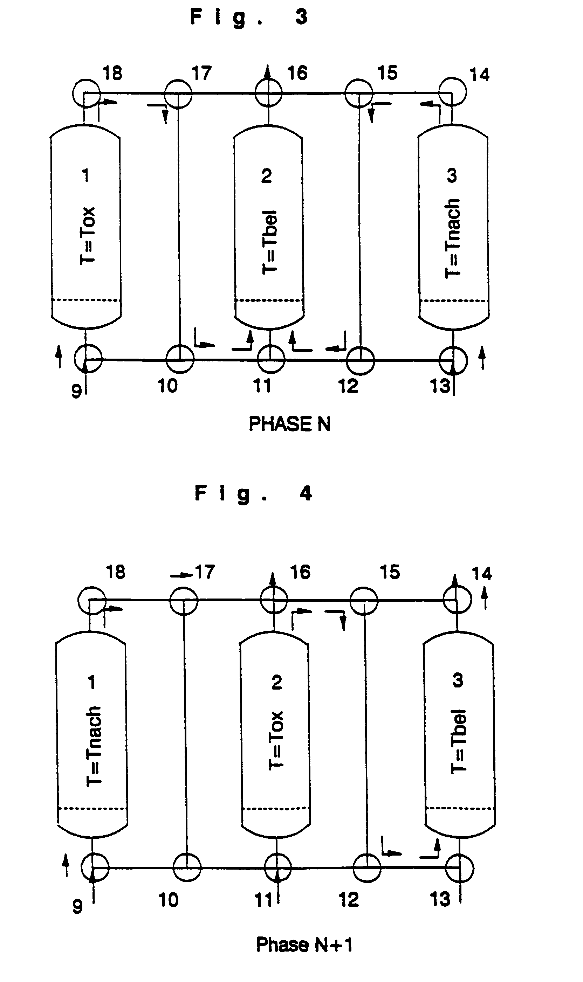

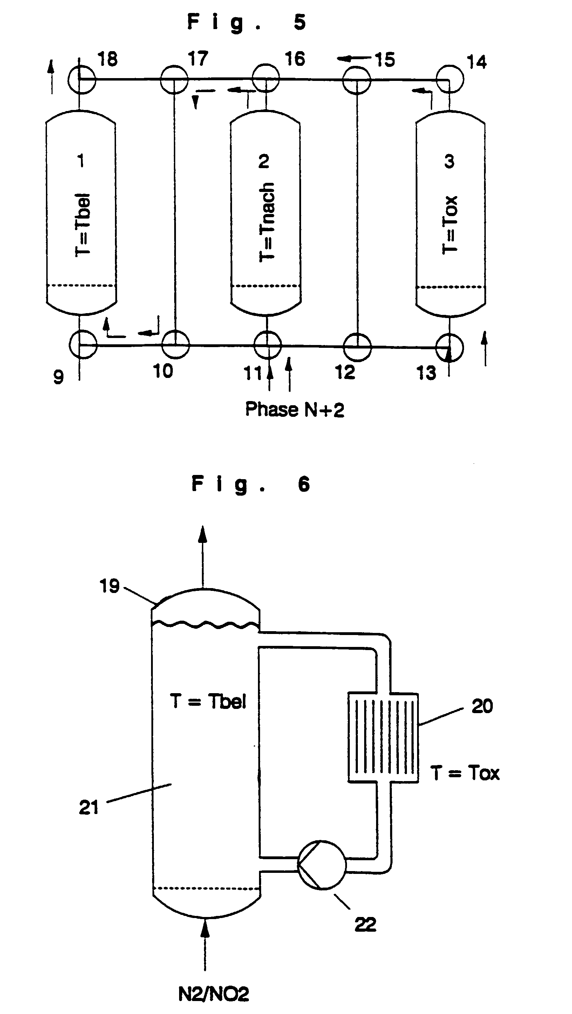

Eine Variante des in den Fig. 1 und 2 dargestellten Verfahrens ergibt sich durch Hinzufügen eines Nachbehandlungsschrittes in der Art, daß man die wie oben beschriebene, bis zum Ende geführte Reaktion nur so lange durchführt, daß der gewünschte Oxidationsgrad, daß heißt der Umwandlungsgrad der primären Alkoholgruppen in Carboxylgruppen, nur zu höchstens 90 %, vorzugsweise nur zu 60 % bis 85 % und insbesondere nur zu 65 % bis 80 % erreicht wird, und das vollständige Erreichen des gewünschten Oxidationsgrades erst in einem Nachoxidationsschritt, das heißt bei beendeter Stickstoffdioxid/Distickstofftetroxid-Zufuhr und im Vergleich zum Oxidationsschritt um mindestens 10 °C, vorzugsweise 15 °C bis 80 °C und insbesondere 20 °C bis 50 °C erhöhten Temperatur (**T**_{**nach**}) erfolgt, wie dies in der nicht vorveröffentlichten deutschen Patentanmeldung P 44 26 443.7 beschrieben ist. Bei diesem Nachoxidationsschritt ist darauf zu achten, daß eine Temperaturobergrenze von 160 °C möglichst nicht überschritten wird, da bei höheren Temperaturen zunehmend Zersetzung beobachtet wurde. Diese Verfahrensvariante kann in der in Fig. 1 wiedergegebenen Vorrichtung dadurch ausgeführt werden, daß man bei höchstens 90-prozentigem Erreichen des gewünschten Oxidationsgrades die Zufuhr des Stickstoffdioxid/Distickstofftetroxid in den Oxidationsreaktor unterbricht, das heißt ein lediglich aus Inertgas bestehendes Wirbelmittel einführt, und die Temperatur entsprechend, das heißt um mindestens 10 °C, auf **T**_{**nach**} erhöht. Einfacher, insbesondere im Hinblick auf die gleichzeitig parallel stattfindende Beladung, kann wie in Fig. 3 dargestellt das Zuschalten eines weiteren Reaktors (**3**) sein, in dem in Phase N der beschriebene Nachoxidationsschritt ausgeführt wird. Durch das Ventil **13** wird Inertgas als Wirbelmittel in den auf **T**_{**nach**} gehaltenen Reaktor **3** geführt, das nach Verlassen dieses Reaktors über das Ventil **14** einer Entsorgungseinrichtung zugeführt werden oder in den Beladungsreaktor geführt werden kann, um gegebenfalls im Nachoxidationsschritt desorbiertes Stickstoffdioxid nicht zu verlieren. In Phase N+1, wie in Fig. 4 dargestellt, wird nach Entfernen des Oxidationsgutes aus Reaktor **3** und Befüllen dieses Reaktors mit zu oxidierendem Polysaccharid unter entsprechendem Umschalten der Ventile und Anheben der Temperaturen in Reaktor **1** auf **T**_{**nach**} und in Reaktor **2** auf **T**_{**ox**} sowie Senken der Temperatur in Reaktor **3** auf **T**_{**bel**} in Reaktor **1** der Nachoxidationsschritt, in Reaktor 2 der Oxidationsschritt und in Reaktor **3** der Beladungsschritt ausgeführt. Anschließendes analoges Vorgehen führt in Phase N+2 (Fig. 5) zum Beladungsschritt in Reaktor **1**, Nachoxidationsschritt in Reaktor **2** und Oxidationsschritt in Reaktor **3**. Die sich durch analoges Umschalten anschließende Phase entspricht dann wieder Phase N. Als Richtwert für die Zeitdauer des Nachoxidationsschritts kann ein Zeitraum von etwa 30 Minuten bis etwa 60 Minuten angegeben werden.

Ein nach dieser Verfahrensvariante hergestelltes Polycarboxylat besitzt als weiteren Vorteil der Erfindung ein wesentlich niedrigeres exothermenergetisches Potential als Produkte, die ohne den Nachoxidationsschritt hergestellt wurden. Dies wirkt sich günstig auf seine Lagerfähigkeit aus.

Eine weitere zur Durchführung des erfindungsgemäßen Verfahrens geignete Vorrichtung ist in Fig. 6 dargestellt. Dabei handelt es sich im wesentlichen um einen Wirbelbettreaktor (**19**) mit parallelem Wärmeaustauscher (**20**), der als Plattenwärmeaustauscher ausgebildet sein kann. Die durch Eintritt von stickstoffdioxidhaltigem Wirbelmittel gebildete Wirbelschicht **21** im Reaktor wird auf der Beladungstemperatur, bei Normaldruck oder einem nicht wesentlich von Normaldruck abweichenden Druck vorzugsweise im Bereich von 40 °C bis 60 °C, gehalten, der Wärmeaustauscher weist Oxidationstemperatur, bei Normaldruck oder einem nicht wesentlich von Normaldruck abweichenden Druck vorzugsweise im Bereich von 80 °C bis 90 °C auf. Der Ausgang des Beladungsrektors **19** zum Wärmeaustauscher **20** liegt unterhalb der Oberkante der Polysaccharid-Wirbelschicht **21**, so daß beladenes Polysaccharid in den Wärmeaustauscher **20** fließt, von wo sie zurück in den Reaktor **19** gelangt. Letzteres kann durch eine zwischengeschaltete Pumpe **22**, die als Membranpumpe ausgebildet sein kann, erleichtert werden. Während bei einer Vorrichtung ohne Wärmeaustauscher, die ansonsten der beschriebenen entspricht und die bei Oxidationstemperatur im Reaktor unter ansonsten gleichen Bedingungen betrieben wird, bis zur vollständigen Oxidation eine Reaktionszeit von etwa 3,5 Stunden erforderlich ist, reduziert sich die in der beschriebenen Vorrichtung benötigte Reaktionszeit auf etwa 1,5 Stunden bis etwa 2 Stunden.

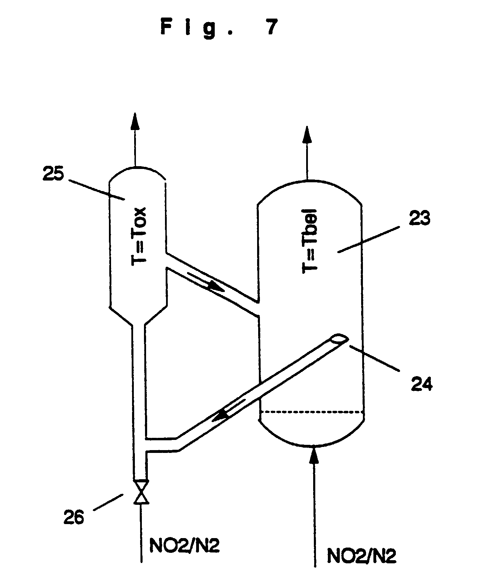

Eine Variante dieses anhand von Fig. 6 beschriebenen Vorgehens ergibt sich durch die in Fig. 7 wiedergegebene Vorrichtung. In dieser bildet sich im auf **T**_{**bel**} gehaltenen Beladungsreaktor **23** mit Hilfe des von unten eintretenden stickstoffdioxidhaltigen Wirbelmittels eine Wirbelschicht aus Polysaccharid. Aus dieser gelangt kontinuierlich Material über den Stutzen **24** und eine gegebenenfalls durch ein Ventil absperrbare Rohrleitung, in die über ein Ventil **26** kontinuierlich Wirbelmittel strömt, welches gegebenenfalls stickstoffdioxidhaltig sein kann, in den auf **T**_{**ox**} gehaltenen Oxidationsreaktor **25**, in dem sich ebenfalls eine Wirbelschicht ausbildet. Aus dem Oxidationsreaktor **25** gelangt kontinuierlich zumindest partiell oxidiertes Polysaccharid über eine gegebenenfalls mittels eines Ventils absperrbare Rohrleitung in den Beladungsreaktor **23** zurück. Diese Feststoffzirkulation ermöglicht einen kontinuierlichen Wechsel zwischen Beladung und Oxidation bis zum gewünschten Oxidationsgrad. Das die Reaktoren **23** und **27** verlassende Wirbelmittel kann, wie oben beschrieben, im Kreis geführt werden.

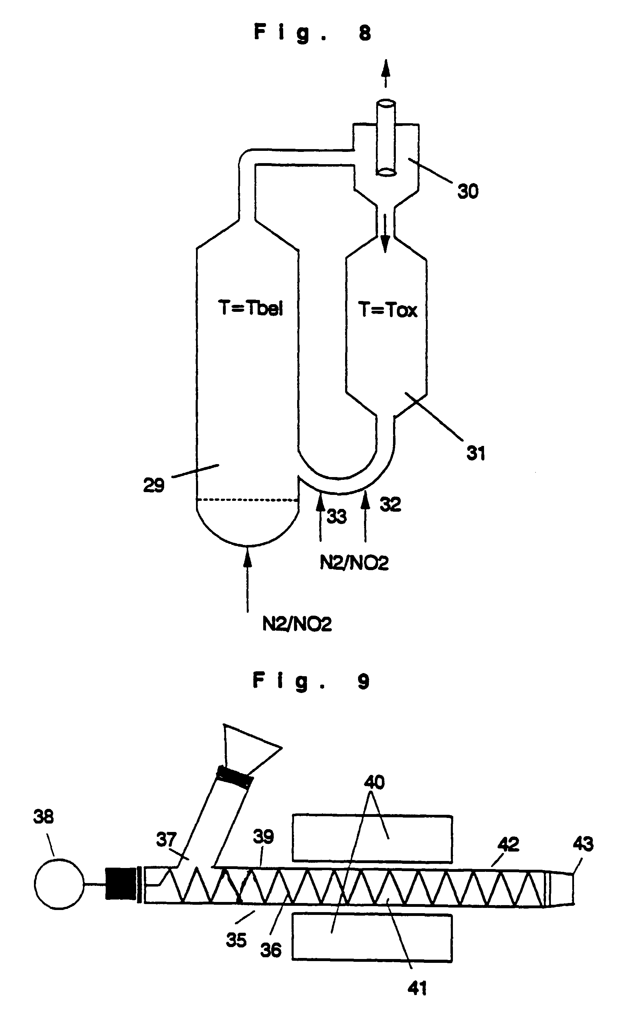

Eine weitere Variante der kontinuierlich zirkulierenden Wirbelschicht ergibt sich durch die Vorrichtung der Fig. 8. Hier gelangt durch das Wirbelmittel aus dem auf **T**_{**bel**} gehaltenen Beladungsreaktor **29** oben ausgetragenes beladenes Polysaccharid mit Hilfe eines Feststoffabscheiders **30** kontinuierlich in den auf **T**_{**ox**} gehaltenen Oxidationsreaktor **31**. Dort verbleibt es für eine gewisse Zeitdauer in der Wirbelschicht, die durch den an der Öffnung **32** eintretenden Wirbelmittelstrom erzeugt wird. Die gleiche Menge an Feststoff, die über den Feststoffabscheider **30** in die Wirbelschicht des Oxidationsreaktors **32** gelangt, wird kontinuierlich durch den an Öffnung **33** eintretenden Wirbelmittelstrom zurück in den Beladungsreaktor **29** geführt.

Eine völlig kontinuierliche Ausführungsform des erfindungsgemäßen Verfahrens ist mit Hilfe der Vorrichtung der Fig. 9 möglich. Dabei handelt es sich im wesentlichen um einen Rohrreaktor **35** mit innenliegender Förderspirale **36**, der an Öffnung **37** mit dem zu oxidierenden Polysaccharid befüllt wird. Über Ventil **38** wird gegebenenfalls Inertgas enthaltendes Stickstoffdioxid/Distickstofftetroxid eingebracht. In der Rohrreaktorstrecke **39**, die sich auf **T**_{**bel**} befindet, wird das Polysaccharid mit Stickstoffdioxid beladen. Nach Durchlaufen der Beladungsstrecke **39** gelangt das beladene Polysaccharid in die mit Hilfe einer Heizvorrichtung **40** auf **T**_{**ox**} beheizte Rohrreaktorstrecke **41** (Oxidationsstrecke), in der die Oxidationsreaktion stattfindet. Daran kann sich eine Rohrreaktorstrecke **42** (Nachoxidationsstrecke) anschließen, die auf **T**_{**nach**} gehalten wird. Das oxidierte Produkt verläßt durch Öffnung **43** den Reaktor und kann, gewünschtenfalls mit Hilfe eines Feststoffabscheiders, vom Gas getrennt werden.

Für das erfindungsgemäße Verfahren ist die Natur des eingesetzten Polysaccharids weitgehend unkritisch. Voraussetzungen sind lediglich, daß es primäre Alkoholgruppen enthaltende Kohlenhydrateinheiten enthält und in einer Form vorliegt, welche die intensive Durchmischung mit dem gasformigen Oxidationsmittel und gegebenenfalls die Ausbildung einer Wirbelschicht zuläßt, insbesondere in Pulverform. In Frage kommen native Polyglucane, insbesondere Stärke und/oder Cellulose, aber auch andere Polysaccharide, zum Beispiel Polygalactomannane wie Guaran und Carubin. Die Polysaccharide können auch in chemisch oder physikalisch modifizierter Form verwendet werden, sofern sie noch oxidierbare primäre Alkoholgruppen enthalten. Wegen der mit diesen besonders glatt ablaufenden Reaktion und aus wirtschaftlichen Gründen sind Stärken unterschiedlicher Provenienz, insbesondere Kartoffelstärke, Weizenstärke, Maisstärke und/oder Tapiokastärke, wie sie als übliche Pulver im Handel sind, bevorzugt. Da Cellulose wegen ihrer Faserigkeit oft Probleme bei der Ausbildung einer Wirbelschicht bereitet, wird sie vorzugsweise in Form von Mikropulver eingesetzt.

Das erfindungsgemäße Verfahren wird insbesondere unter Einsatz der genannten Polyglucane vorzugsweise über einen solchen Zeitraum geführt, daß das Oxidationsprodukt im statistischen Mittel zu wenigstens 15 Mol-% aus oxidierten Anhydroglucoseeinheiten der Formel I 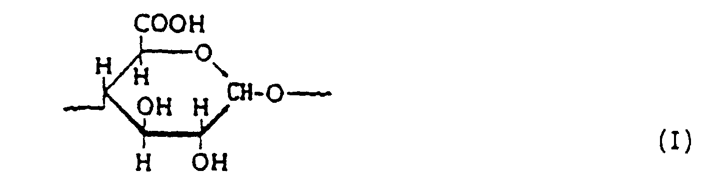 besteht, was einem Carboxylgruppengehalt von mindestens 4 Gew.-% entspricht.

Durch ein erfindungsgemäßes Verfahren erhält man Polycarboxylate auf Polyglucan-Basis, welche die oxidierten Anhydroglucoseeinheiten insbesondere der Formel I vorzugsweise zu wenigstens 25 Mol-%, insbesondere zu wenigstens 35 Mol-% im Molekül enthalten, wobei als weiterer Vorteil keine wesentlichen Mengen anderer Oxidations-Folgeprodukte vorliegen. Die Obergrenze des Gehaltes an Einheiten gemäß Formel I liegt bei 100 Mol-%, insbesondere bei etwa 95 Mol-%. Bevorzugt werden durch das erfindungsgemäße Verfahren Polycarboxylate hergestellt, welche Einheiten gemäß Formel I im Bereich von 70 Mol-% bis 100 Mol-%, entsprechend einem Carboxylgruppengehalt von bis zu ca. 25 Gew.-%, aufweisen.

Im Falle daß das zu oxidierende Polysaccharid zur Agglomeration und zur in der Fließbetttechnik gefürchteten Kanalbildung neigt, kann sein Fließverhalten durch den Zusatz geringer Mengen von insbesondere festen Additiven, zu denen beispielsweise Magnesiumoxid, Calciumfluorid, Calciumphosphat, feinteilige Zeolithe oder Kieselgel, insbesondere das unter dem Namen Aerosil^{(R)} vertriebene Siliziumdioxid gehören, signifikant verbessert werden. In dieser Hinsicht hohe Effekte werden bereits beim Einsatz niedriger Additivmengen von vorzugsweise 0,1 Gew.-% bis 5 Gew.-%, insbesondere 0,25 Gew.-% bis 1 Gew.-%, jeweils bezogen auf zu oxidierendes Polysaccharid, erreicht. Das eingesetzte Polysaccharid enthält vorzugsweise nicht mehr als 15 Gew.-%, insbesondere nicht mehr als 10 Gew.-% Wasser.

Im Anschluß an den Oxidations- und gegebenenfalls Nachoxidationsschritt ist es möglich, wenigstens einen Teil der Carboxylgruppen des Oxidationsprodukts durch Behandeln mit einem basischen Reagenz zu neutralisieren, das heißt von der Säure- in die Salzform zu überführen. Als Neutralisationsmittel wird vorzugsweise eine wäßrige Lösung, die Alkalihydroxid, Ammoniumhydroxid und/oder organische Base enthält, verwendet. Auch direkt im Anschluß an die Oxidationsreaktion ist die Neutralisation möglich, beispielsweise durch Begasen des Reaktionsgefäßes mit Ammoniak. Die Salzbildung ist auch unter reduzierenden Bedingungen, beispielsweise unter Verwendung von Natriumborhydrid, möglich. Vorzugsweise wird das Neutralisationsmittel in solchen Mengen eingesetzt, daß sämtliche Carboxylgruppen des Oxidationsprodukts in die Salzform überführt werden. Dabei ist sowohl die Zugabe des Oxidationsproduktes zum Neutralisationsmittel als auch die Zugabe des Neutralisationsmittels zum Oxidationsprodukt möglich. Die Salzbildung kann auch unter den Bedingungen der Anwendung beziehungsweise Weiterverarbeitung der Polycarboxylate in deren Säureform erfolgen, beispielsweise bei der Herstellung oder dem Einsatz von Wasch- oder Reinigungsmitteln durch übliche alkalische Bestandteile derartiger Mittel.

Die nach dem erfindungsgemäßen Verfahren hergestellten Polycarboxylate werden vorzugsweise als Builder oder Co-Builder in Wasch- oder Reinigungsmitteln verwendet. In derartigen Mitteln werden sie vorzugsweise als Co-Builder in Mengen von 0,5 Gew.-% bis 10 Gew.-%, insbesondere 2 Gew.-% bis 7 Gew.-%, bezogen jeweils auf das Gesamtgewicht des Mittels, die anorganischen Builder als Haupt-Builder enthalten, verwendet. Besonders bevorzugt werden sie in letztgenannten Mitteln verwendet, die Zeolith-NaA, wie er beispielsweise im Zusammenhang mit Textilwaschmitteln in der deutschen Patentschrift DE 24 12 837 beschrieben ist, und/oder Schichtsilikate, wie sie in der europäischen Patentanmeldung EP 164 514 beschrieben sind, als Haupt-Builder und durch das erfindungsgemäße Verfahren hergestellte Polycarbonsäuren oder deren Salze in Mengenverhältnissen von 2:1 bis 5:1 enthalten. Die Zusammensetzung der Wasch- und/oder Reinigungsmittel kann ansonsten im Rahmen bekannter Rezepturen praktisch beliebig gewählt werden.

### Beispiele

### Beispiel 1:

In einer der in Fig. 9 dargestellten Vorrichtung entsprechenden Apparatur wurde Stärke oxidiert. Dazu wurden 187,3 g Kartoffelstärke (Feuchtigkeitsgehalt 4 Gew.-%) mit 1,8 g des Fließhilfsmittels Aerosil^{(R)} 200 gemischt und so über die Öffnung **37** in den Reaktor **35** (Edelstahlrohr, Länge 105 cm, Innendurchmesser 1,6 cm) gefüllt, daß das über die Öffnung **38** eingeleitete N₂O (in einer Menge von 120 l/h) zumindest teilweise absorbiert wurde. Die innenliegende Edelstahlspirale **36** rotierte mit 50 Umdrehungen pro Minute, so daß die beladene Stärke den Ofen **40** (Heizstrecke ca. 50 cm, Temperatur 140 °C) innerhalb einer Verweilzeit in der Oxidationsstrecke **41** von etwa 1 bis 2 Minuten passierte. Innerhalb von etwa 25 Minuten war die gesamte Stärke durch die Apparatur gefördert worden. Das Produkt wurde mit wäßrigem Aceton nitrat- und nitritfrei gewaschen, durch Waschen mit Aceton entwässert und getrocknet. Man erhielt ein Oxidationsprodukt mit einer Säurezahl von 140.

### Beispiel 2:

In einem Wirbelbettreaktor mit parallel geschaltetem Plattenwärmetauscher gemäß Fig. 6 wurden 1 kg trockene Stärke eingefüllt (Feuchtigkeitsgehalt 6 Gew.-%). Das Wirbelbett wurde auf 40 °C erwärmt, der Plattenwärmetauscher auf 80 °C. In die Apparatur wurde ein Gemisch aus Stickstoff und Stickstoffdioxid im Volumenverhältnis von 1:1 eingebracht, je 150 l/h N₂ und 150 l/h NO₂. Die Apparatur war so ausgelegt, daß der Ausgang zum Wärmetauscher unterhalb der Oberkante des Fließbetts lag und so immer Stärke in den Plattenwärmetauscher floß, von wo aus sie mittels einer Membranpumpe in das Wirbelbett zurückgepumpt wurde. Die Pumpgeschwindigkeit wurde so eingestellt, daß der Reaktorinhalt einmal alle 15 Minuten bis 30 Minuten umgepumpt wurde. Dabei wurde darauf geachtet, daß die Temperatur im Fließbett nie 60 °C überschritt und im Wärmetauscher 80-90 °C nicht überschritten wurden. Nach einer Reaktionszeit von 2 Stunden und Aufarbeitung wie im Beispiel 1 erhielt man ein pulverförmiges Oxidationsprodukt mit einer Säurezahl von 285.

### Beispiel 3:

In einer der in Fig. 3 dargestellten Vorrichtung entsprechenden Apparatur wurde Stärke oxidiert. Dazu wurden jeweils 1043 g Kartoffelstärke mit einem Feuchtegehalt von 7 Gew.-% mit je 0,5 Gew.-% Aerosil^{(R)} 200 gemischt und in die beiden Reaktoren 1 und 2 gefüllt (Höhe 80 cm, Innendurchmesser 90 mm). Eine zur Fluidisierung geeignete Menge von Stickstoff wurde durch den Reaktor 1 geleitet und dessen Innentemperatur auf 48 °C gebracht.

Darauf wurde die Apparatur so umgeschaltet, daß der zugeführte Gasstrom zunächst durch den Reaktor 1, anschließend durch einen Kühler zum Auskondensieren von Feuchtigkeit und danach durch den Reaktor 2 (Beladungsreaktor) strömte. Dann wurde zusätzlich Stickstoffdioxid durch die Wirbelschicht von Reaktor 1 geleitet. Die Gasmengen wurden über auf Luft geeichte Durchflußmesser so eingestellt, daß die Anzeigen jeweils 150 Normliter pro Stunde betrugen. Durch Thermostatisierung wurde die Innentemperatur im Reaktor 1 auf 50 °C eingestellt und dort gehalten. Die Innentemperatur im Reaktor 2 wurde auf 30 °C gehalten.

Nach drei Stunden wurde die Apparatur so umgeschaltet, daß die Zufuhr von Stickstoffdioxid zum Reaktor 1 beendet wurde. Reaktor 2 wurde nun direkt drei Stunden mit dem oben erwähnten Gasgemisch (Stickstoff und Stickstoffdioxid je 150 Normliter pro Stunde) beschickt. Die aus Reaktor 2 (nun Oxidationsreaktor) austretenden Gase wurden durch einen zuvor mit dem oben angegebenen Gemisch aus Kartoffelstärke und Aerosil^{(R)} 200 beschickten, die gleiche Größe wie Reaktor 1 oder 2 aufweisenden Reaktor 3 (Beladungsreaktor) geleitet. Durch Thermostatisierung wurden die Innentemperaturen im Reaktor 2 (Oxidationsreaktor) auf 50° C und im Reaktor 3 (Beladungsreaktor) auf 30° C gehalten.

Nach Abschalten des Stickstoffdioxidstromes durch Reaktor 1 wurde in diesem die Innentemperatur innerhalb von 30 Minuten auf 80° C erhöht und 30 Minuten auf dieser Höhe gehalten. Der Stickstoffstrom durch Reaktor 1 (nun Nachoxidationsreaktor) betrug während dieser Phase 150 Normliter pro Stunde. Das dabei den Reaktor 1 verlassende Gasgemisch wurde, nach Auskondensieren von Feuchtigkeit, ebenfalls in den Reaktor 3 geleitet. Anschließend wurde Reaktor 1 auf Raumtemperatur abgekühlt, das Produkt entnommen und charakterisiert: Säurezahl 310. Reaktor 1 stand nun für eine erneute Beschickung mit dem oben angegebenen Gemisch aus Kartoffelstärke und Aerosil^{(R)} 200 zur Beladung zur Verfügung.

Nach beendigter Oxidationsphase im Reaktor 2 wurde Reaktor 3 als Oxidationsreaktor geschaltet und das Produkt aus Reaktor 2 der thermischen Nachbehandlung (Nachoxidationsphase) unterzogen. Die Säurezahl des Produktes aus Reaktor 2 betrug dann 367.

Das Produkt aus Reaktor 3 besaß nach Oxidationsphase und thermischer Nachbehandlung entsprechend der oben beschriebenen Vorgehensweise eine Säurezahl von 362.

### Bezugszeichenliste

- **1**, **2**, **3**, **19**: Wirbelschichtreaktoren
- **4**, **5**, **6**, **7**, **8**, **9**, **10**, **11**, **12**, **13**, **14**, **15**, **16**, **17, 18, 22, 26, 38**: Ventile
- **20**: Wärmeaustauscher
- **21**: Wirbelschicht
- **23, 29**: Beladungsreaktoren
- **24**: Stutzen
- **25, 31**: Oxidationsreaktoren
- **30**: Feststoffabscheider
- **32, 33**: Öffnungen für Wirbelmittel
- **35**: Rohrreaktor
- **36**: Förderspirale
- **37**: Öffnung für Polysaccharid-Befüllung
- **39**: Beladungsstrecke
- **40**: Heizvorrichtung
- **41**: Oxidationsstrecke
- **42**: Nachoxidationsstrecke
- **43**: Öffnung für Polysaccharid-Entnahme

## Patentansprüche

1. Verfahren zur Herstellung von Polycarbonsäuren oder deren Salzen aus Polysacchariden durch Oxidation mit gasförmigem Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, dadurch gekennzeichnet, daß man bei einer Beladungstemperatur im Bereich vom Siedepunkt des Stickstoffdioxids unter dem jeweiligen Druck bis zu einer 50 °C darüber liegenden Temperatur Stickstoffdioxid/Distickstofftetroxid zuführt, welches zumindest anteilsweise vom Polysaccharid absorbiert wird, und anschließend bei einer Oxidationstemperatur, die mindestens 10 °C über der Beladungstemperatur liegt, primäre Alkoholgruppen zu Carboxylgruppen oxidiert.

2. Verfahren nach Anspruch 1, dadurch gekennzeichnet, daß die Oxidationstemperatur 10 °C bis 40 °C, insbesondere 15 °C bis 30 °C über der Beladungstemperatur liegt.

3. Verfahren nach Anspruch 1 oder 2, dadurch gekennzeichnet, daß man die Zufuhr von Stickstoffdioxid/Distickstofftetroxid beendet, wenn der gewünschte Umwandlungsgrad der primären Alkoholgruppen in Carboxylgruppen zu 60 % bis 85 %, insbesondere zu 65 % bis 80 % erreicht ist, und die Temperatur um mindestens 10 °C über die Oxidationstemperatur erhöht.

4. Verfahren nach Anspruch 3, dadurch gekennzeichnet, daß man die Temperatur um 15 °C bis 80 °C, insbesondere um 20 °C bis 50 °C erhöht.

5. Verfahren nach einem der Ansprüche 1 bis 4, dadurch gekennzeichnet, daß man mindestens 15 %, insbesondere 25 % bis 100 % der primären Alkoholgruppen der Polysaccharide in Carboxylgruppen umwandelt.

6. Verfahren nach einem der Ansprüche 1 bis 5, dadurch gekennzeichnet, daß man die Oxidation in einer Wirbelschicht, deren Wirbelmittel ein Stickstoffdioxid-haltiges Gas ist, durchführt.

7. Verfahren nach einem der Ansprüche 1 bis 6, dadurch gekennzeichnet, daß man als zu oxidierendes Polysaccharid Stärke, insbesondere Kartoffelstärke, Weizenstärke, Maisstärke und/oder Tapiokastärke, einsetzt.

8. Verfahren nach einem der Ansprüche 1 bis 7, dadurch gekennzeichnet, daß man es über einen solchen Zeitraum führt, daß das Oxidationsprodukt im statistischen Mittel zu wenigstens 15 Mol-% aus oxidierten Anhydroglucoseeinheiten der Formel I 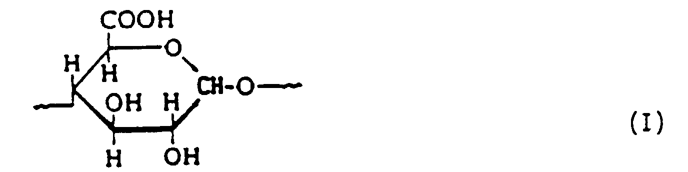 besteht.

9. Verfahren nach Anspruch 8, dadurch gekennzeichnet, daß oxidierte Anhydroglucoseeinheiten der Formel I vorzugsweise zu wenigstens 25 Mol-%, insbesondere zu wenigstens 35 Mol-% im Molekül enthalten sind.

10. Verwendung von Wirbelschichtreaktoren in einem Verfahren gemäß einem der Ansprüche 1 bis 9.

## Claims

1. A process for the production of polycarboxylic acids or salts thereof from polysaccharides by oxidation with gaseous nitrogen dioxide/dinitrogen tetroxide, the primary alcohol groups of the polysaccharides being at least partly converted into carboxyl groups, and optionally at least partial neutralization of the carboxylic acid groups formed, characterized in that nitrogen dioxide/dinitrogen tetroxide absorbed at least partly from the polysaccharide is introduced at a charging temperature in the range from the boiling point of the nitrogen dioxide under the particular pressure to a temperature 50°C higher and in that primary alcohol groups are then oxidized to carboxyl groups at an oxidation temperature at least 10°C above the charging temperature.

2. A process as claimed in claim 1, characterized in that the oxidation temperature is 10°C to 40°C and, more particularly, 15°C to 30°C above the charging temperature.

3. A process as claimed in claim 1 or 2, characterized in that the introduction of nitrogen dioxide/dinitrogen tetroxide is terminated when 60% to 85% and, more particularly, 65% to 80% of the required degree of conversion of primary alcohol groups into carboxyl groups is reached and the temperature is increased by at least 10°C above the oxidation temperature.

4. A process as claimed in claim 3, characterized in that the temperature is increased by 15°C to 80°C and, more particularly, by 20°C to 50°C.

5. A process as claimed in any of claims 1 to 4, characterized in that at least 15% and, more particularly, 25% to 100% of the primary alcohol groups of the polysaccharides are converted into carboxyl groups.

6. A process as claimed in any of claims 1 to 5, characterized in that the oxidation is carried out in a fluidized bed of which the fluidizing agent is a gas containing nitrogen dioxide.

7. A process as claimed in any of claims 1 to 6, characterized in that starch, more particularly potato starch, wheat starch, corn starch and/or tapioca starch, is used as the polysaccharide to be oxidized.

8. A process as claimed in any of claims 1 to 7, characterized in that it is carried out over such a period that, on a statistical average, at least 15 mole-% of the oxidation product consists of oxidized anhydroglucose units corresponding to formula I:

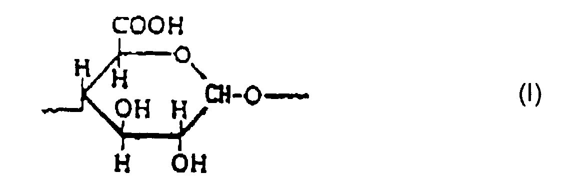

9. A process as claimed in claim 8, characterized in that preferably at least 25 mole-% and, more preferably, at least 35 mole-% of oxidized anhydroglucose units corresponding to formula I are present in the molecule.

10. The use of fluidized bed reactors in the process claimed in any of claims 1 to 9.

## Revendications

1. Procédé de production d'acides polycarboxyliques ou de leurs sels à partir de polysaccharides, par oxydation au moyen d'un mélange gazeux dioxyde d'azote/tétroxyde de diazote avec conversion d'au moins une partie des groupes alcool primaire des polysaccharides en groupes carboxyle, ainsi que le cas échéant par neutralisation au moins partielle des groupes acide carboxylique qui se sont formés,
caractérisé en ce que
pour une température de charge dans la zone du point d'ébullition du dioxyde d'azote à la pression respective, on amène jusqu'à une température qui se situe 50°C au-dessus, le mélange dioxyde d'azote/tétroxyde de diazote qui est absorbé au moins partiellement par le polysaccharide, et ensuite à une température d'oxydation qui se situe au moins à 10°C au-dessus de la température de charge, on oxyde les groupes alcool primaire en groupes carboxyle.

2. Procédé selon la revendication 1,
caractérisé en ce que
la température d'oxydation se situe de 10°C à 40°C en particulier de 15 à 30°C, au-dessus de la température de charge.

3. Procédé selon la revendication 1 ou la revendication 2,
caractérisé en ce qu'
on arrête l'amenée du mélange dioxyde d'azote/tétroxyde de diazote lorsque le degré de conversion désiré des groupes alcool primaire en groupes carboxyle atteint 60 à 85 %, en particulier 65 à 80 %, et que la température est augmentée d'au moins 10°C au-dessus de la température d'oxydation.

4. Procédé selon la revendication 3,
caractérisé en ce qu'
on augmente la température de 15°C à 80°C, en particulier de 20°C à 50°C.

5. Procédé selon l'une quelconque des revendications 1 à 4,
caractérisé en ce qu'
on convertit au moins 15 %, en particulier de 25 à 100 % des groupes alcool primaire des polysaccharides en groupe carboxyle.

6. Procédé selon l'une quelconque des revendications 1 à 5,
caractérisé en ce qu'
on effectue l'oxydation en lit fluidisé dont l'agent tourbillonnaire est un gaz contenant du dioxyde d'azote.

7. Procédé selon l'une quelconque des revendications 1 à 6,
caractérisé en ce qu'
on utilise comme polysaccharide à oxyder, des amidons, en particulier de la fécule de pomme de terre, de l'amidon de blé, de l'amidon de maïs et/ou de l'amidon de tapioca.

8. Procédé selon l'une quelconque des revendications 1 à 7,
caractérisé en ce que
le temps de séjour du procédé est tel que le produit d'oxydation consiste en moyenne statistique en au moins 15 % molaire d'unités d'anhydroglucose oxydé de formule I,

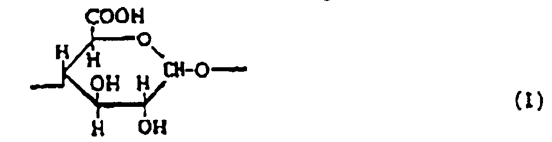

9. Procédé selon la revendication 8,
caractérisé en ce que
les unités d'anhydroglucose oxydé de formule I sont contenues de préférence pour au moins 25 % molaire, en particulier pour au moins 35 % molaire dans la molécule.

10. Utilisation de réacteurs à lit fluidisé dans un procédé selon l'une quelconque des revendications 1 à 9.
